# EUROPÄISCHE PATENTSCHRIFT

(11) **EP 2 690 306 B1**
(45) Veröffentlichungstag und Bekanntmachung des Hinweises auf die Patenterteilung: **16.09.2015**
(21) Anmeldenummer: 12005420.0
(22) Anmeldetag: 25.07.2012
(51) Int. Cl.: F16F 9/05, B60G 11/27

(54) **Luftfeder**
Pneumatic springs
Coussin d'air

(43) Veröffentlichungstag der Anmeldung: 29.01.2014
(73) Patentinhaber: Vibracoustic CV Air Springs GmbH, 20099 Hamburg (DE)
(72) Erfinder: Dehlwes, Stephan, 22844 Norderstedt (DE)
(74) Vertreter: Flügel Preissner Kastel Schober

(56) Entgegenhaltungen:
- EP-A1- 0 859 165
- WO-A2-02/35112
- DE-A1- 4 118 577
- DE-A1- 19 642 683
- DE-A1-102006 038 807
- DE-C- 946 950
- GB-A- 935 831
- US-A- 3 078 086

## Beschreibung

### Technisches Gebiet

Die Erfindung befasst sich mit einer Luftfeder mit Rollbalg, welcher wenigstens einen wulstförmigen Steckrand hat, und Abrollkolben insbesondere für Nutzfahrzeuge. Luftfedern, die als Rollbalg ausgeführt werden, bestehen von ihrem grundsätzlichen Aufbau her aus einem Abrollkolben, an dem das eine Ende eines Rollbalgs befestigt ist. Das andere Ende des Rollbalgs schließt an einen Abschlussdeckel bzw. einen zweiten Abrollkolben an. Die Abrollkolben sind sehr unterschiedlich ausgestattet. Um einen hohen Federkomfort zu erreichen, ist es günstig, wenn das Innenvolumen des Abrollkolbens für den Federvorgang mitbenutzt wird. Der Abrollkolben ist dann als Hohlkörper ausgeführt und wird in der Regel aus mehreren Teilen zusammengefügt. Diese Ausbildungen sind aufwendig und entsprechend teuer. Meist werden die Abrollkolben aus zwei Teilen zusammengesetzt, die miteinander verschweißt werden. Bei zweiteiligen Stahlkolben hat die Schweißnat etwa die gleiche Festigkeit, wie das Basismaterial. Problematischer ist es, wenn der Abrollkolben aus Kunststoff hergestellt wird. Bei Abrollkolben aus einem Kunststoff in zweiteiliger Ausführung, hat dieses Einschränkungen in der Funktion zur Folge.

Aus Festigkeitsgründen können meistens nicht die gesamten Federwege genutzt werden. Abrollkolben aus Kunststoff für Nutzfahrzeuge können zwar auch einteilig hergestellt werden, sie besitzen jedoch ein kleines Innenvolumen, was zu einem schlechteren Komfort der Luftfeder führt.

### Stand der Technik

In der WO 2007/142153 A1 ist eine Luftfeder dargestellt, die einen zweiteiligen Kolben hat. Der Kolben besteht aus einem Oberteil und einem Unterteil, die beide miteinander verscheißt sind. Am Oberteil des Kolbens Ist ein nach innen gerichteter Absatz vorhanden, an dem die wulstförmigen Steckränder des Rollbalgs aufgesteckt sind. Das andere Ende des Rollbalgs hat besonders ausgebildete Ränder, welche von einem umgebördelten Rand eines Deckels erfasst sind. Der Innenraum des Kolbens steht mit dem Luftinnenraum des Rollbalgs in ständiger Verbindung. Nachteilig bei dieser Ausführungsform ist die zweiteilige Ausführung des Abrollkolbens und die unterschiedliche Ausführung der Befestigungsenden des Rollbalgs.

Eine ähnliche Ausführung, wie voranstehend beschrieben, ist dem US-Patent 6 386 524 B1 zu entnehmen. Hier liegt eine Kolbenausbildung vor, bei der der Kolben aus Kunststoff hergestellt ist und eine doppelte Ringwand hat, welche durch einen Boden verschlossen ist. Auch hier liegt eine zweiteilige Ausführung des Abrollkolbens vor und ein Rollbalg, welcher mit unterschiedlichen Steckrändern versehen ist.

Eine weitere Ausführungsform eines Abrollkolbens aus Kunststoff zeigt die DE 10 2006 040 546 B4. Hier liegt ebenfalls ein Kolben vor, welcher eine innere und eine äußere Kammer hat, die über Öffnungen miteinander kommunizieren. Auch hier wird der Kolben durch einen Deckel verschlossen, so dass eine zweiteilige Ausführungsform vorliegt.

Weitere zweiteilige Ausführungsformen von Kunststoffkolben sind der WO 2009/015 821 A1 und der EP 1 862 335 B1 zu entnehmen.

In der US 3,078,086 A ist eine Luftfeder mit einem einteiligen Abrollkolben offenbart, an dessen Innenseite ein Wulst eines Rollbalgs mittels eines Napfes befestigt ist.

Ferner geht aus der DE 196 426 83 A1 eine Luftfeder hervor, dessen Schlauchrollbalg an der Außenseite eines einteiligen Abrollkolbens mittels eines Befestigungsringes befestigt ist.

Zudem ist in der WO 02/35112 A2 eine Luftfeder offenbart, deren Luftfederbalg an der Innenseite eines Abrollkolbens mittels eines Befestigungsrings befestigt ist. Die Innenseite des Abrollkolbens und der Befestigungsring bilden dabei korrespondierende Konusflächen aus.

### Darstellung der Erfindung

Der Erfindung liegt die Aufgabe zugrunde eine verbesserte Luftfeder herzustellen, die einfach in ihrem Aufbau ist, eine kostengünstige Fertigung gestattet, eine leichte Montage erlaubt und einen hohen Federkomfort ergibt.

Die Lösung der gestellten Aufgabe wird mit den Merkmalen des Anspruchs 1 erreicht. Die Unteransprüche stellen vorteilhafte Weiterbildungen des Erfindungsgegenstands dar.

Bei der vorliegenden Erfindung wird ein einteiliger Abrollkolben verwendet, dessen Innenraum in ständigem Luftaustausch mit dem vom Rollbalg eingefassten Luftraum steht. Des Weiteren wird ein Rollbalg eingesetzt, der wenigstens an seinem am Abrollkolben anzuschließenden Steckrand eine Dichtwulst mit einem undehnbaren Wulstkern hat. Die Befestigung des Steckrands mit Lagesicherung und Abdichtung am Abrollkolben erfolgt auf der Innenseite des Abrollkolbenrands.

Die einteilige Ausbildung des Abrollkolbens wird durch die Befestigung des Steckrands auf der Innenseite des Abrollkolbens ermöglicht. Hierfür ist die Wulst des Steckrandes entsprechend ausgebildet.

Der Abrollkolbenrand hat auf seiner Innenseite eine Aufnahme für den Steckrand des Rollbalgs. Diese Aufnahme wird aus einer ringförmigen parallel zur Mittelachse des Abrollkolbens verlaufenden Ringfläche gebildet, die auch mit einem Hinterschnitt versehen werden kann, und einem radial vorstehenden Axialanschlag für die Dichtwulst des Steckrands besteht. Über einen Befestigungsring wird der Steckrand in seiner Lage am Abrollkolbenring gehalten. Dieser Befestigungsring ist im Querschnitt gesehen zumindest Abschnittsweise keilförmig ausgebildet. Der Befestigungsring wird im Betriebszustand vom Rollbalg gehalten, indem der Rollbalg schlaufenartig den Befestigungsring umgreift. Bevorzugt wird ein Befestigungsring verwendet, der nur einseitig eine keilförmige Fläche aufweist. Diese keilförmige Fläche weist zum Boden des Abrollkolbens. Der Befestigungsring hat weiter eine ebene Fläche die am Hinterschnitt anlegt. Am oberen Rand des Hinterschnitts endet diese ebene Fläche des Befestigungsrings. Es ist auch günstig, wenn anschließend an die Keilfläche eine parallel zur Achse verlaufende Stützfläche anschließt. Diese Form des Befestigungsrings korrespondiert mit dem Ende des Rollbalgs und dem daran vorhandenen Steckrand. Dabei ist festzuhalten, dass die Wulst des eingesetzten Steckrings radial nach außen gerichtet ist. Das heißt, dass die Wulst des Rollbalgs entgegengesetzt ausgerichtet ist, als es bei den bisher bekannten Steckverbindungen von Rollbälgen üblich ist. Bei der Montage wird der Steckrand in die Aufnahme des Kolbens eingeschoben. Gleichzeit damit oder danach wird der Befestigungsring in die Aufnahme zwischen Hinterschnitt und Rollbalg eingeschoben. Sobald der Luftdruck in der Luftfeder steigt bildet sich die Rollschleife des Rollbalgs aus, so dass der Rollbalg an der Abrollwand des Kolbens zur Anlage kommt und dabei den Befestigungsring umschlingt.

Die bevorzugte Ausführungsform des Befestigungsrings sieht vor, dass er mit einem auf der axialen Außenseite des Abrollkolbenrands anliegenden Vorsprung versehen wird. Hierdurch wird der Befestigungsring in seiner Lage an der Aufnahme festgelegt. Um seine Lage in der Aufnahme zu sichern, kann der Befestigungsring mit der Innenseite der Aufnahme am Abrollkolbenrand verklebt werden. Möglich sind hier auch andere Lösungen, zum Beispiel kann der Befestigungsring auf seiner radialen Außenseite mit einer Ringnut zur Aufnahme eines Dichtungsrings versehen sein. Möglich ist auch, dass der Befestigungsring mit einer Positionierbohrung bzw. Haltebohrung ausgestattet ist, welche zur Erfassung eines in die Wand der Aufnahme eingeschraubten Positionier- bzw. Haltestifts dient. Möglich ist auch eine Ausführungsform, bei der in der Innenseite der Aufnahme umlaufende nasenförmige Rasthaken vorgesehen sind, die in entsprechende umlaufende Rastnuten am eingesetzten Befestigungsring einrasten. Schließlich ist auch eine Lösung denkbar, bei der der Befestigungsring Rasthaken hat, die bei in die Aufnahme eingesetztem Befestigungsring in eine entsprechende Rastnut der Aufnahmewand einrasten.

Die vorliegende Erfindung eignet sich besonders bei Abrollkolben, die aus einem Kunststoff bestehen. Dabei ist es auch günstig, wenn der Rollbalg ein Kreuzlagenrollbalg ist, der ohne seitliche Stützwände auskommt.

Durch die Verlegung des Stecksitzes an den Innenrand des Abrollkolbens ist es möglich den Abrollkolben einteilig, zum Beispiel in Form eines Topfes, auszuführen und das maximale Innenvolumen des Abrollkolbens beim Federvorgang zu nutzen. Mit Hilfe des Befestigungsrings wird der Stecksitz in einer vorgegebenen Position gehalten und der Luftfederbalg gasdicht und sicher am Abrollkolben befestigt. Die Montage ist einfach, besondere Hilfsmittel beim Einsetzen des Steckrahmens und des Befestigungsrings sind nicht erforderlich.

### Kurzbeschreibung der Zeichnung

An Hand der in der Zeichnung dargestellten Ausführungsbeispiele wird die Erfindung nachstehend näher erläutert:
Es zeigt,
   - Fig. 1: im Schnitt und in schematischer Darstellung einen aus Kunststoff hergestellten einteiligen Abrollkolben an dessen Rand der Steckrand des Rollbalgs mit Hilfe eines Befestigungsrings angebracht ist,
   - Fig. 2: die linke Seite des Abrollkolbenrands vergrößert mit einem Befestigungsring dessen oberer Rand mit dem oberen Rand des Abrollkolbens abschließt,
   - Fig. 3: die auf der rechten Seite der Figur 1 gezeigte Befestigung mit einem Befestigungsring der einen an den Abrollkolbenrand anliegenden Vorsprung hat,
   - Fig. 4: eine Ausbildungsform nach der Figur 3, bei der der Befestigungsring an der Wand des Hinterschnitts angeklebt ist,
   - Fig. 5: einen Befestigungsring mit einem umlaufenden Rasthaken, die in eine entsprechende Rastnut in der Aufnahmewand einrasten,
   - Fig. 6: einen Befestigungsring mit einer Positionierbohrung und einem in die Aufnahmewand eingeschraubten Positionierstift,
   - Fig. 7: einen Befestigungsring mit einer Ringnut zur Aufnahme eines Dichtrings und
   - Fig. 8: einen Befestigungsring mit nasenförmigen Rasthaken welche in entsprechende Rastnuten an der Aufnahme einrasten.

### Ausführung der Erfindung

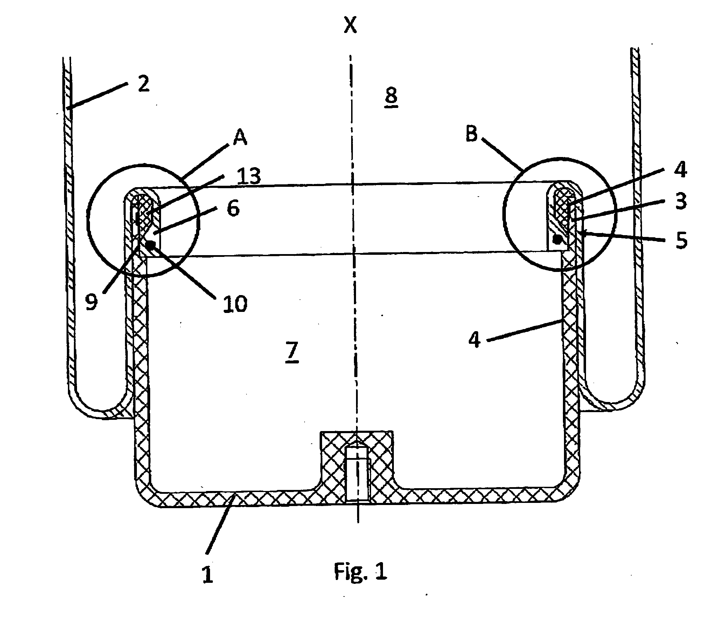

In der Figur 1 ist es schematisch im Schnitt ein aus Kunststoff bestehender Kolben 1 mit einem daran angeschlossenen Rollbalg 2 dargestellt. Auf die Wiedergabe einer kompletten Luftfeder mit Deckel bzw. mit zweitem Kolben ist verzichtet worden. Der Abrollkolben 1 ist an seinem oberem Rand 3 auf dessen Innenseite 4 mit einer Aufnahme 5 für den Steckrand 6 des Rollbalgs 2 versehen. Der Innenraum 7 des Abrollkolbens 1 steht in ständigem Luftaustausch mit dem vom Rollbalg 2 eingefassten Luftraum 8. Der Steckrand 6 hat die Dichtwulst 9 mit dem undehnbaren Wulstkem 10.

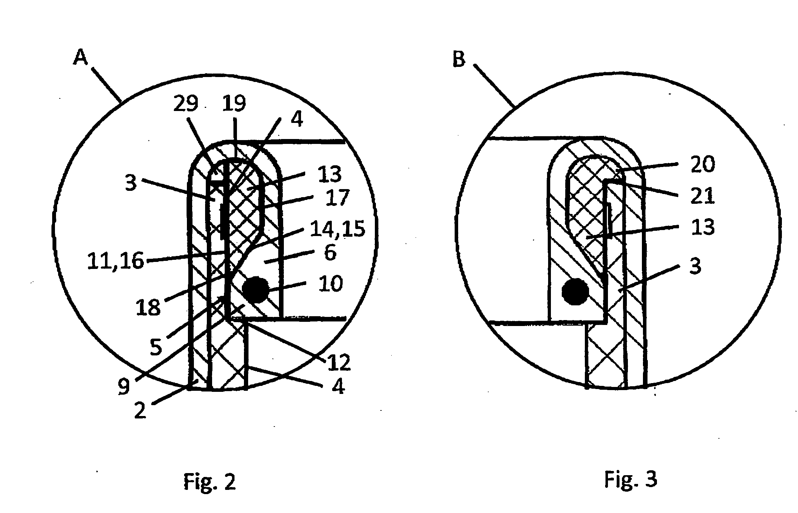

Die Figur 2 zeigt vergrößert das Detail A von der linken Seite der Figur 1. Die Aufnahme 5 auf der Innenseite 4 des Abrollkolbenrands 3 ist durch einen Hinterschnitt gebildet, welcher eine ringförmige parallel zur Mittelachse des Abrollkolbens 1 verlaufenden Ringfläche 11 und dem radial vorstehenden Axialanschlag 12 für die Dichtwulst 9 besteht. Der Steckrand 6 des Rollbalgs 2 wird durch den Befestigungsring 13 in seiner Lage am Abrollkolbenrand 3 gehalten. Der Befestigungsring 13 hat einen keilförmig ausgebildeten Abschnitt 14. Dieser Abschnitt 14 korrespondiert mit der parallel verlaufenden Fläche 15 am Steckrand 6 bzw. der Dichtwulst 9. Der Befestigungsring 13 wird in seiner Lage vom Rollbalg 2 gehalten, indem der Rollbalg 2 schlaufenartig den Befestigungsring 13 umgreift. Der Befestigungsring 13 hat eine Ebene an der Ringfläche 11 anliegende Fläche 16, außerdem hat er eine parallel dazu verlaufende Stützfläche 17, mit der er am Rollbalg 2 anliegt. Die Spitze 18 des Befestigungsringes 13 weißt zum Boden des Abrollkolbens 1. Die Wulst 9 des Steckrands 6 ist eingebaut radial nach außen gerichtet. Dabei ist sie mit dem von Wulstkern 10 überdeckten Bereich in Kontakt mit der Innenfläche 4 der Abrollkolbenwand 3. Der obere Rand 19 des Befestigungsrings 13 schließt mit dem oberen Rand 29 des Hinterschnitts der Aufnahme 5 ab. Sowohl der Befestigungsring 13 als auch der obere Rand des Abrollkolbenrands 3 sind leicht gerundet um scharfe Eckkanten zu vermeiden.

In der Figur 3 ist der Ausschnitt B auf der Figur 1 vergrößert gezeigt. Die Ausbildung auf der rechten Seite der Figur 1 ist vergleichbar mit der Figur 2 mit dem Unterschied, dass der Befestigungsring 13 den Vorsprung 20 hat, mit dem er auf der Oberseite 21 des Abrollkolbenrands 3 anliegt. Dies ist die bevorzugte Ausführungsform des Befestigungsrings 13.

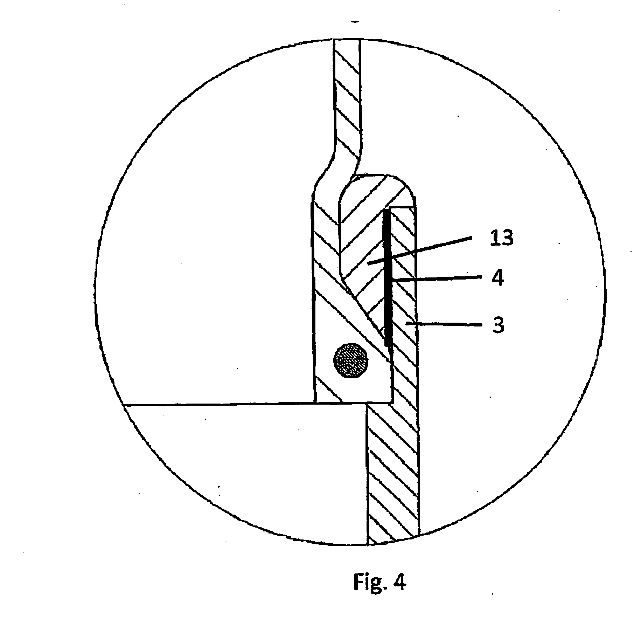

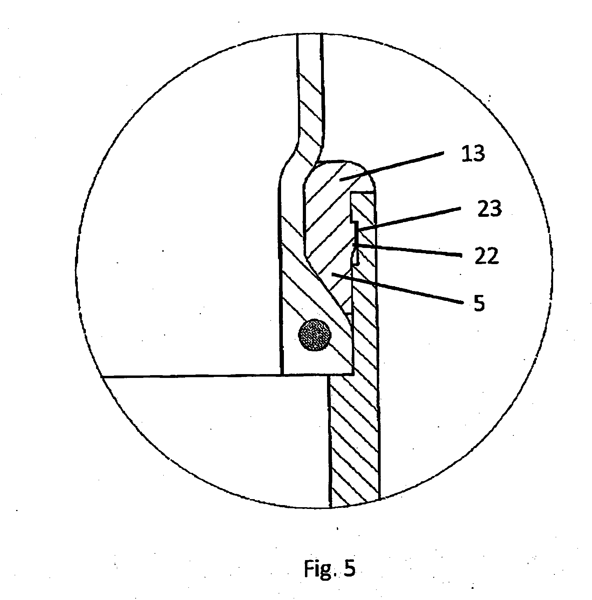

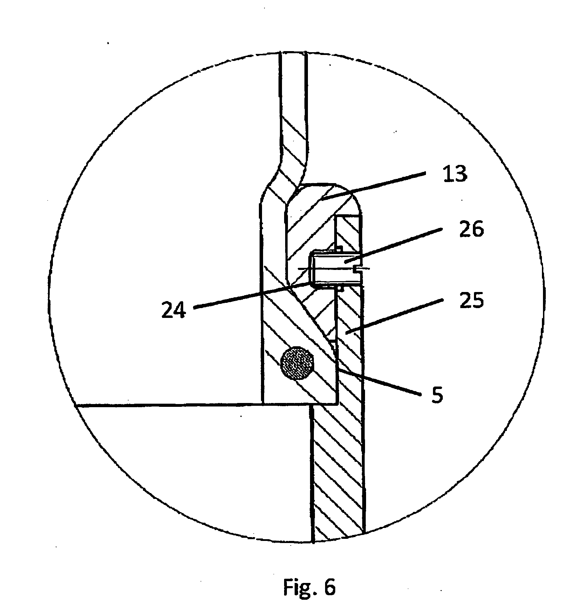

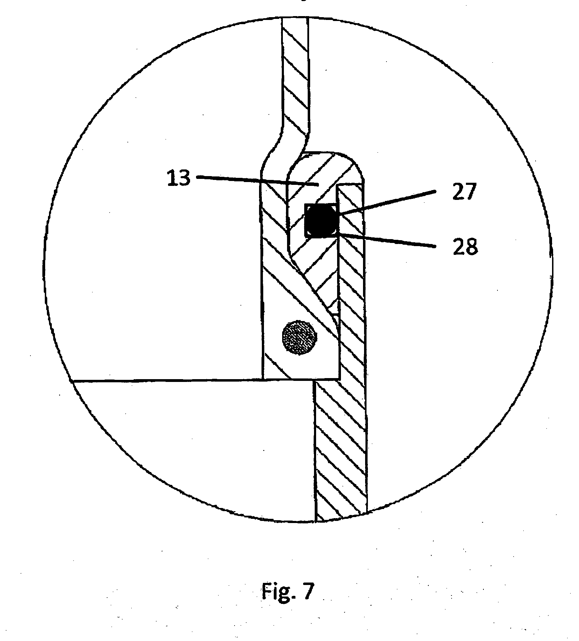

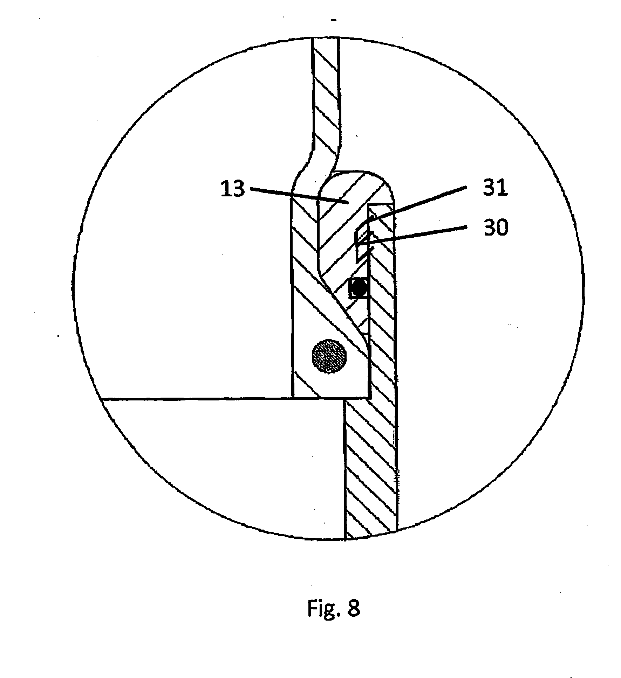

Die Figuren 4 bis 8 zeigen mögliche Ergänzungen in denen zusätzliche Haltemöglichkeiten für den Befestigungsring 13 und auch Dichtmöglichkeiten wiedergegeben sind. So zeigt die Figur 4 einen Befestigungsring 13, der mit der Innenseite 4 des Abrollkolbenrands 3 verklebt ist. Die Figur 5 zeigt einen Befestigungsring 13 mit einem Rasthaken 22 der in eine entsprechende Rastnut 23 der Aufnahme 5 einrastet. Die Figur 6 zeigt den Befestigungsring 13 mit einer Positionierbohrung 24, in die ein in die Wand der Aufnahme 5 eingeschraubter Positionierstift eingreift. Die Figur 7 zeigt die Möglichkeit der Unterbringung eines zusätzlichen Dichtringes 27 in der Ringnut 28 im Befestigungsring 13. Schließlich ist es möglich den Befestigungsring 13 mit Rasthaken 30 zu versehen, die bei einem Einsatz des Befestigungsrings in die Aufnahme 5 in entsprechende Rastnuten 31 in der Aufnahmewand einrasten. In den Figuren 4 bis 8 ist der Rollbalg 2 im drucklosen noch nicht eingerolltem Zustand gezeigt.

## Patentansprüche

1. Luftfeder mit Rollbalg (2), welcher wenigstens einen wulstförmigen Steckrand hat, und einen Abrollkolben (1), insbesondere für Nutzfahrzeuge, mit folgenden Merkmalen:
- der Abrollkolben (1) ist einteilig ausgebildet und sein Innenraum (7) steht in ständigem Luftaustausch mit dem vom Rollbalg (2) eingefassten Luftraum (8),
- der Rollbalg (2) hat wenigstens an seinem am Abrollkolben (1) anzuschließenden Steckrand (6) eine Dichtwulst (9) mit einem undehnbaren Wulstkern (10),
- die Befestigung des Steckrands (6) mit Lagesicherung und Abdichtung am Abrollkolben (1) ist auf der Innenseite (4) des Abrollkolbenrands (3) angeordnet.

2. Luftfeder mit Rollbalg (2) nach Anspruch 1, **dadurch gekennzeichnet, dass** der Rollbalg (2) ein Kreuzlagenrollbalg ist.

3. Luftfeder mit Rollbalg (2) nach einem der Ansprüche 1 oder 2, **dadurch gekennzeichnet, dass** der Abrollkolbenrand (3) auf seiner Innenseite (4) eine Aufnahme (5) für den Steckrand (6) des Rollbalgs (2) hat.

4. Luftfeder mit Rollbalg (2) nach einem der Ansprüche 1 bis 3, **dadurch gekennzeichnet, dass** die Aufnahme (5) aus einem Hinterschnitt mit einer ringförmigen parallel zur Mittelachse (x) des Abrollkolbens (1) verlaufenden Ringfläche(11) und einem radial vorstehenden Axialanschlag (12) für den Dichtwulst (9) besteht.

5. Luftfeder mit Rollbalg (2) nach einem der Ansprüche 1 bis 4, **dadurch gekennzeichnet, dass** der Steckrand (6) des Rollbalgs (2) ist durch einen Befestigungsring (13) in seiner Lage am Abrollkolbenrand (3) gehalten ist.

6. Luftfeder mit Rollbalg (2) nach Anspruch 5, **dadurch gekennzeichnet, dass** der Befestigungsring (13) im Querschnitt gesehen zumindest abschnittsweise keilförmigen ausgebildet ist.

7. Luftfeder mit Rollbalg (2) nach Anspruch 5 oder 6, **dadurch gekennzeichnet, dass** der Befestigungsring (13) vom Rollbalg (2) gehalten ist, indem der Rollbalg (2) schlaufenartig den Befestigungsring (13) umgreift.

8. Luftfeder mit Rollbalg (2) nach einem der Ansprüche 5 bis 7, **dadurch gekennzeichnet, dass** der Befestigungsring (13) eine an der Ringfläche (11) anliegende Fläche (16) und eine im Winkel (α) zum Hinterschnitt ausgebildete Keilfläche (14) hat.

9. Luftfeder mit Rollbalg (2) nach Anspruch 8, **dadurch gekennzeichnet, dass** die Spitze (18) des Befestigungsringes (13) zum Boden des Abrollkolben (1) weist.

10. Luftfeder mit Rollbalg (2) nach Anspruch 8 oder 9 , **dadurch gekennzeichnet, dass** an die Keilfläche (14) eine parallel zur Kolbenachse (x) verlaufende Stützoberfläche (17) anschließt.

11. Luftfeder mit Rollbalg (2) nach einem der Ansprüche 5 bis 10, **dadurch gekennzeichnet, dass** die Wulst (9) des Steckrandes (6) an die Form des Befestigungsringes (13) angepasst ist.

12. Luftfeder mit Rollbalg (2) nach einem der Ansprüche 5 bis 11, **dadurch gekennzeichnet, dass** der Befestigungsring (13) einen auf der axialen Außenseite (21) des Abrollkolbenrands (3) anliegenden Vorsprung (20) hat.

13. Luftfeder mit Rollbalg (2) nach einem der Ansprüche 5 bis 12, **dadurch gekennzeichnet, dass** der Befestigungsring (13) mit der Innenseite (4) des Abrollkolbenrands (3) verklebt ist.

14. Luftfeder mit Rollbalg (2) nach einem der Ansprüche 5 bis 13, **dadurch gekennzeichnet, dass** der Befestigungsring (13) auf seiner radialen Außenseite eine Ringnut (28) zur Aufnahme eines Dichtungsringes (27) hat.

15. Luftfeder mit Rollbalg (2) nach einem der Ansprüche 5 bis 14, **dadurch gekennzeichnet, dass** der Befestigungsring (13) mit mindestens einer Positionier- bzw. Haltebohrung (24) ausgestattet ist, zur Erfassung eines in die Wand (25) der Aufnahme (5) eingeschraubten Positionier- bzw. Haltestiftes (26).

16. Luftfeder mit Rollbalg (2) nach einem der Ansprüche 5 bis 15, **dadurch gekennzeichnet, dass** auf der Außenseite (19) des Befestigungsrings (13) nasenförmige Rasthaken (22) vorgesehen sind, die in entsprechende vorgesehene Rastnut (23) an der Aufnahme (5) einrasten.

17. Luftfeder mit Rollbalg (2) nach einem der Ansprüche 5 bis 16, **dadurch gekennzeichnet, dass** der Befestigungsring (13) Rasthaken (30) hat, die bei in die Aufnahme (5) eingesetztem Befestigungsring (13) in eine entsprechende Rastnut (31) in der Aufnahmewand einrastet.

18. Luftfeder mit Rollbalg (2) nach einem der Ansprüche 1 bis 17, **dadurch gekennzeichnet, dass** der Abrollkolben (1) aus einem Kunststoff besteht.

19. Luftfeder mit Rollbalg (2) nach einem der Ansprüche 5 bis 18, **dadurch gekennzeichnet, dass** der Befestigungsring (13) mehrteilig ausgeführt ist.

20. Luftfeder mit Rollbalg (2) nach einem der Ansprüche 1 bis 19, **dadurch gekennzeichnet, dass** die Wulst (9) radial nach außen gerichtet ist.

## Claims

1. Air spring with a rolling lobe (2), which has at least one bead-shaped plugging edge and one rolling piston (1), particularly for utility vehicles, with the following features:
- the rolling piston (1) is formed as one piece and its inner space (7) is in permanent air exchange with the airspace (8) enclosed by the rolling lobe (2),
- the rolling lobe (2) has a sealing bead (9) with an unstretchable bead core (10) at least at its plugging edge (6) that is to be connected to the rolling piston (1),
- the attachment of the plugging edge (6) with position securing and seal to the rolling piston (1) is disposed on the inner side (4) of the rolling piston edge (3).

2. Air spring with a rolling lobe (2) according to claim 1, **characterized in that** the rolling lobe (2) is a cross-position rolling lobe.

3. Air spring with a rolling lobe (2) according to one of the claims 1 or 2 **characterized in that** the rolling piston edge (3) has a receiver (5) for the plugging edge (6) of the rolling lobe (2) on its inner side (4).

4. Air spring with a rolling lobe (2) according to one of the claims 1 to 3 **characterized in that** the receiver (5) consists of an undercut with an annular surface (11) extending parallel to the center axis (x) of the rolling piston (1) and a radially protruding axial stop (12) for the sealing bead (9).

5. Air spring with a rolling lobe (2) according to one of the claims 1 to 4 **characterized in that** the plugging edge (6) of the rolling lobe (2) is held in its position at the rolling piston edge (3) by an attachment ring (13).

6. Air spring with a rolling lobe (2) according to claim 5, **characterized in that** the attachment ring (13) is in cross-sectional view at least section-wise formed in shape of a wedge.

7. Air spring with a rolling lobe (2) according to one of the claims 5 or 6 **characterized in that** the attachment ring (13) is held by the rolling lobe (2) by the rolling lobe (2) enclosing the attachment ring (13) in a loop-like manner.

8. Air spring with a rolling lobe (2) according to one of the claims 5 to 7 **characterized in that** the attachment ring (13) has a surface (16) abutting on the annular surface (11) and a wedge surface (14) formed in an angle (α) to the undercut.

9. Air spring with a rolling lobe (2) according to claim 8, **characterized in that** the top (18) of the attachment ring (13) points to the bottom of the rolling piston (1).

10. Air spring with a rolling lobe (2) according to one of the claims 8 or 9 **characterized in that** a support surface (17) running parallel to the piston axis (x) follows the wedge surface (14).

11. Air spring with a rolling lobe (2) according to one of the claims 5 to 10 **characterized in that** the bead (9) of the plugging edge (6) is adapted to the shape of the attachment ring (13).

12. Air spring with a rolling lobe (2) according to one of the claims 5 to 11 **characterized in that** the attachment ring (13) has a protrusion (20) abutting on the axial outer side (21) of the rolling piston edge (3).

13. Air spring with a rolling lobe (2) according to one of the claims 5 to 12 **characterized in that** the attachment ring (13) is glued with the inner side (4) of the rolling piston edge (3).

14. Air spring with a rolling lobe (2) according to one of the claims 5 to 13 **characterized in that** the attachment ring (13) has an annular groove (28) on its radial outer side for receiving a sealing ring (27).

15. Air spring with a rolling lobe (2) according to one of the claims 5 to 14 **characterized in that** the attachment ring (13) is provided with at least one positioning or holding bore (24) for grasping a positioning or holding peg (26) screwed into the wall (25) of the receiver (5).

16. Air spring with a rolling lobe (2) according to one of the claims 5 to 15 **characterized in that** nose-shaped latching hooks (22), which latch into corresponding designated latching grooves (23) at the receiver (5), are designated on the outer side (19) of the attachment ring (13).

17. Air spring with a rolling lobe (2) according to one of the claims 5 to 16 **characterized in that** the attachment ring (13) has latching hooks (30), which latch into a corresponding latching groove (31) in the receiving wall, if the attachment ring (13) is inserted into the receiver (5).

18. Air spring with a rolling lobe (2) according to one of the claims 1 to 17 **characterized in that** the rolling piston (1) consists of plastics.

19. Air spring with a rolling lobe (2) according to one of the claims 5 to 18 **characterized in that** the attachment ring (13) is embodied as multiple pieces.

20. Air spring with a rolling lobe (2) according to one of the claims 1 to 19 **characterized in that** the bead (9) is radially directed to the outside.

## Revendications

1. Ressort pneumatique avec soufflet à enroulement (2), qui possède au moins une bordure d'emboîtement en forme de bourrelet, et un piston de déroulement (1), en particulier pour véhicules utilitaires, avec les caractéristiques suivantes :
- le piston de déroulement (1) est réalisé d'une seule pièce et son volume intérieur (7) est en échange pneumatique permanent avec la chambre pneumatique (8) enfermée par le soufflet à enroulement (2),
- le soufflet à enroulement (2) comporte, au moins sur sa bordure d'emboîtement (6) à raccorder au piston de déroulement (1), un bourrelet d'étanchéité (9) avec un noyau de bourrelet inextensible (10),
- la fixation de la bordure d'emboîtement (6) avec blocage en position et étanchement sur le piston de déroulement (1) est agencée sur le côté intérieur (4) de la bordure (3) du piston de déroulement.

2. Ressort pneumatique avec soufflet à enroulement (2) selon la revendication 1, **caractérisé en ce que** le soufflet à enroulement (2) est un soufflet à enroulement à nappes croisées.

3. Ressort pneumatique avec soufflet à enroulement (2) selon l'une des revendications 1 ou 2, **caractérisé en ce que** la bordure (3) du piston de déroulement possède, sur sa face intérieure (4), un récepteur (5) pour la bordure d'emboîtement (6) du soufflet à enroulement (2).

4. Ressort pneumatique avec soufflet à enroulement (2) selon l'une des revendications 1 à 3, **caractérisé en ce que** le récepteur (5) est constitué par une contre-dépouille avec une surface annulaire (11) s'étendant en formant un anneau parallèle à l'axe médian (x) du piston de déroulement (1), et par une butée axiale (12), dépassant radialement, pour le bourrelet d'étanchéité (9).

5. Ressort pneumatique avec soufflet à enroulement (2) selon l'une des revendications 1 à 4, **caractérisé en ce que** la bordure d'emboîtement (6) du soufflet à enroulement (2) est retenue par une bague de fixation (13) dans sa position sur la bordure (3) du piston de déroulement.

6. Ressort pneumatique avec soufflet à enroulement (2) selon la revendication 5, **caractérisé en ce que** la bague de fixation (13) est réalisée, vue en section transversale, au moins par portion en forme de coin.

7. Ressort pneumatique avec soufflet à enroulement (2) selon la revendication 5 ou 6, **caractérisé en ce que** la bague de fixation (13) est retenue par le soufflet à enroulement (2), du fait que le soufflet à enroulement (2) enserre la bague de fixation (13) à la manière d'une boucle.

8. Ressort pneumatique avec soufflet à enroulement (2) selon l'une des revendications 5 à 7, **caractérisé en ce que** la bague de fixation (13) possède une surface (16) appliquée contre la surface annulaire (11) et une surface en coin (14) réalisée sous un angle (□) par rapport à la contre-dépouille.

9. Ressort pneumatique avec soufflet à enroulement (2) selon la revendication 8, **caractérisé en ce que** la pointe (18) de la bague de fixation (13) est orientée vers le fond du piston de déroulement (1).

10. Ressort pneumatique avec soufflet à enroulement (2) selon la revendication 8 ou 9, **caractérisé en ce qu'**une surface de soutien (17) s'étendant parallèlement à l'axe du piston (x) se raccorde à la surface en coin (14).

11. Ressort pneumatique avec soufflet à enroulement (2) selon l'une des revendications 5 à 10, **caractérisé en ce que** le bourrelet (9) de la bordure d'emboîtement (6) est adapté à la forme de la bague de fixation (13).

12. Ressort pneumatique avec soufflet à enroulement (2) selon l'une des revendications 5 à 11, **caractérisé en ce que** la bague de fixation (13) possède une saillie (20) appliquée contre la face extérieure axiale (21) de la bordure (3) du piston de déroulement.

13. Ressort pneumatique avec soufflet à enroulement (2) selon l'une des revendications 5 à 12, **caractérisé en ce que** la bague de fixation (13) est collée sur la face intérieure (4) de la bordure (3) du piston de déroulement.

14. Ressort pneumatique avec soufflet à enroulement (2) selon l'une des revendications 5 à 13, **caractérisé en ce que** la bague de fixation (13) présente, sur sa face extérieure radiale, une gorge annulaire (28) pour recevoir une bague d'étanchéité (27).

15. Ressort pneumatique avec soufflet à enroulement (2) selon l'une des revendications 5 à 14, **caractérisé en ce que** la bague de fixation (13) est équipée d'au moins un perçage de positionnement ou de maintien (24), pour recevoir une tige de positionnement ou de maintien (26) vissée dans la paroi (25) du récepteur (5).

16. Ressort pneumatique avec soufflet à enroulement (2) selon l'une des revendications 5 à 15, **caractérisé en ce que** des crochets d'enclenchement (22) en forme d'ergots sont prévus sur la face extérieure (19) de la bague de fixation (13), qui s'enclenchent dans une gorge d'enclenchement (23) correspondante prévue sur le récepteur (5).

17. Ressort pneumatique avec soufflet à enroulement (2) selon l'une des revendications 5 à 16, **caractérisé en ce que** la bague de fixation (13) possède des crochets d'enclenchement (30) qui, lorsque la bague de fixation (13) est mise en place dans le récepteur (5), s'enclenchent dans une gorge d'enclenchement correspondante (31) dans la paroi du récepteur.

18. Ressort pneumatique avec soufflet à enroulement (2) selon l'une des revendications 1 à 17, **caractérisé en ce que** le piston de déroulement (1) est en matière plastique.

19. Ressort pneumatique avec soufflet à enroulement (2) selon l'une des revendications 5 à 18, **caractérisé en ce que** la bague de fixation (13) est réalisée en plusieurs parties.

20. Ressort pneumatique avec soufflet à enroulement (2) selon l'une des revendications 1 à 19, **caractérisé en ce que** le bourrelet (9) est orienté radialement vers l'extérieur.
